# EUROPEAN PATENT APPLICATION

(11) **EP 3 026 241 A1**
(43) Date of publication of application: **01.06.2016**
(21) Application number: 15192132.7
(22) Date of filing: 29.10.2015
(51) Int. Cl.: F02C 7/22, F02C 9/40

(54) **AIRCRAFT ENGINE FUEL SYSTEM**

(30) Priority: 26.11.2014 GB 201420989
(71) Applicant: Rolls-Royce plc, London SW1E 6AT (GB)
(72) Inventor: Swann, Peter, Derby, Derbyshire DE24 8BJ (GB)
(74) Representative: Rolls-Royce plc

(57) **Abstract**

This invention concerns fuel delivery system for an aircraft engine (10). The system entails two or more fuel sources (32, 34, 36) onboard an aircraft (54), each fuel source (32, 34, 36) having a different fuel therein. At least one fuel delivery regulator (30; 42; 44; 46) is arranged to receive fuel from the fuel sources onboard the aircraft for supply to the aircraft engine (10), and a control unit (26) arranged to control operation of the regulator (30; 42; 44; 46), wherein the control unit (26) actuates the regulator (30; 42; 44; 46) so as to vary the flow of fuels from the plurality of fuel sources to the engine (10) in an order of priority according to the specific energy of the different fuels in the plurality of fuel sources (32; 34; 36). The system may achieve fuel efficiency savings by burning the available fuels in a default priority order.

## Description

### BACKGROUND OF THE INVENTION

The present invention relates to systems for supply of fuel to aircraft engines and, more particularly, to systems which can accommodate two or more distinct fuel compositions onboard an aircraft.

Commercial jet aircraft engines have conventionally burned kerosene derived from crude oil. In recent years attention has turned to the potential for development and deployment of jet fuel derived from alternative sources. To avoid the requirement for changes to aircraft fuel systems, in many cases the alternative fuels have similar properties to the kerosene they are intended to replace. Examples of alternative fuels include biomass-to-liquids (BTL), synthetic paraffinic kerosene (SPK), hydro-treated renewable jet-fuel (HRJ), alcohol-to-jet (ATJ), gas-to-liquids (GTL), coal-to-liquids (CTL).

Aviation biofuels (such as BTL, HRJ, ATJ, SPK) tend to be much more expensive than kerosene, and furthermore their availability is extremely limited. Although there are many initiatives underway to scale-up production and increase availability of alternative fuels, it is likely that for some time to come kerosene will remain the dominant fuel, with alternative fuels representing a small proportion of commercial aviation's total fuel-burn.

Due, at least in part, to the scarcity and high price of aviation biofuels, their typical usage is as part of a fuel blend comprising kerosene as the majority component and the biofuel as a minority component. In the prior art, the fuel blend composition is typically determined without reference to the characteristics of the flight for which the fuel is intended. Furthermore, conventional aircraft are supplied with only one composition of fuel which is therefore used throughout the flight in a pre-blended composition.

EP 2685280 A2 (and the corresponding US 2013/343958 A1), both in the name of the applicant, disclose the use of a fuel system that can carry two distinct fuel compositions, which can be selectively blended in order to deliver a resulting fuel composition to the engines for the purpose of altering the vapour trails formed by the engines. Thus EP 2685280 A2 focuses on reducing climate impact based on selective contrail mitigation.

WO 2012/045029 A1 discloses a dual fuel aircraft engine control system in which different fuels can be used in varying proportions for different flight phases in accordance with the cost of each fuel, so as to reduce the overall fuel cost for a flight.

It is an aim of the present invention to provide an alternative aircraft fuel system and a method of use thereof, which may be employed to improve aircraft efficiency. It may be considered an additional or alternative aim to provide an aircraft fuel system for administering a plurality of fuels with low weight penalty.

### BRIEF SUMMARY OF THE INVENTION

According to a first aspect of the invention there is provided a fuel delivery system for one or more aircraft engine, the system comprising at least one fuel delivery regulator arranged to receive fuel from a plurality of fuel sources onboard the aircraft for supply to the one or more aircraft engine, each fuel source having a different fuel therein, and a control unit arranged to control operation of the regulator, wherein the control unit actuates the regulator so as to vary the flow of fuels from the plurality of fuel sources to the one or more engine in an order of priority according to the specific energy of the different fuels in the plurality of fuel sources.

The reference to different fuels herein encompasses different fuel types and/or different blends/ratios of the same, or different, fuel types.

The invention is advantageous particularly because fuel contributes a very significant proportion of the aircraft mass at takeoff. Accordingly, if the different available fuels are used in a specific order, then a fuel which has lower energy density per unit mass (i.e. which requires a greater mass of fuel per unit of energy stored) can be burned first in order to achieve a quicker decrease in aircraft mass. Although notionally a relatively small mass saving in itself, the reduced aircraft mass in turn requires a slightly lower fuel burn over the remainder of the flight. Particularly when summed over a number of flights, the invention can thus lead to an important increase in efficiency for the aircraft as a whole. This invention therefore represents a change in thinking away from the use of two fuels for contrail mitigation or for blending based on fuel cost alone.

The control unit may control sequential delivery of the different fuels. The use of fuels in series (i.e. fuel switching), rather than the mixing/blending of fuels in parallel may yield greater efficiency savings. In the event that the two fuels are required to be mixed/blended on board in order to achieve a useable fuel composition, the control unit may control mixing of the fuels to achieve a first fuel blend with a minimal specific energy (e.g. a minimum possible or minimum available specific energy for the fuels on board the aircraft). The control unit may control delivery of the first fuel blend to the engine in advance of a second fuel blend. The second fuel blend may have a maximum specific energy (e.g. a maximum possible or maximum available specific energy for the fuels on board the aircraft). One or more further fuel blends may have specific energy between the first and second fuel blends, if required.

The priority order of delivery according to the specific energy of the different fuels may comprise a default fuel delivery setting. The default fuel delivery setting may or may not be the default fuel setting for the entirety of a flight. For example, the control unit may or may not implement the priority order of delivery of the different fuels to the engine over all flight phases or the entirety of each flight.

In examples of the invention, the control unit may alter the fuel delivered to the engine away from the priority order in response to any or any combination of a particular flight phase, a sensed engine condition, a sensed aircraft condition, and/or a sensed environmental or altitude condition. For example the control unit may instruct an actual delivered fuel that differs from the priority order in order to prioritise local air quality (e.g. below a threshold altitude or at takeoff). Additionally or alternatively, the control unit may control delivery of an actual delivered fuel that differs from the priority order in order to achieve contrail mitigation according to one or more sensed condition.

The control unit may or may not control delivery of the entirety of one fuel or fuel type, or an available volume of said one fuel or fuel type, in priority over one or more further fuel or fuel type aboard the aircraft.

An available volume of one or more of the different fuels may be accessible to, or calculated by, the control unit. The available volume of any one or more fuel may be less than the total volume of said one or more fuel onboard the aircraft. The control unit may instruct delivery of the entirety of the available volume of the fuel with the lowest specific energy, e.g. as a default condition, prior to delivery of one or more other fuel composition onboard the aircraft.

Thus a portion of one or more different fuel may be retained in reserve by the control unit, without being consumed according to the priority order of fuel consumption. This may allow a volume of one fuel, such as kerosene, to be retained to accommodate circumstances in which that fuel may be preferred or essential, such as engine relight, amongst other possible circumstances that may include, but not be limited to, non-flight modes where contact with engine components with a specific fuel type or composition helps to retain operability

The available volume may be an available volume of fuel for normal engine operation. A reserve of one or more fuel may thus be retained for abnormal modes of engine operation, which are less likely to occur during a flight or else which cannot be scheduled in advance.

The control unit may control sequential delivery of different fuels to the aircraft engine according to the order of priority. Thus delivery of different fuels may be time sequenced or consecutively ordered rather than being delivered in parallel, e.g. as a ratio of the total concurrent fuel composition delivered to the engine. This may avoid the need for mixing/blending equipment on board the aircraft, thereby reducing potential weight, complexity and maintenance burden of the system.

The aircraft may comprise a plurality of engines. The control unit may control delivery of fuel to each engine, e.g. concurrently, according to the first aspect of the invention or any of the preferable features described herein.

According to a second aspect of the invention, there is provided a fuel system control unit for an aircraft, the control unit comprising machine readable instructions for actuation of one or more fuel regulator so as to control delivery of a plurality of different fuels stored in respective fuel sources on the aircraft to one or more aircraft engine, wherein the control unit actuates the regulator in use so as to vary the flow of fuels from the plurality of fuel sources to the engine in an order of priority according to the specific energy of the different fuels in the plurality of fuel sources.

According to a third aspect of the invention, there is provided a data carrier comprising machine readable instructions for operation of a control unit according to the second aspect.

There may be provided a method of supplying different fuels from a plurality of fuel sources on board an aircraft to one or more aircraft engine, corresponding to the first aspect.

Any of the essential or preferable features defined in relation to any one aspect of the invention may be applied to any further aspect, either alone or in combination.

### BRIEF DESCRIPTION OF THE DRAWINGS

Practicable embodiments of the invention are described in further detail below by way of example only with reference to the accompanying drawings, of which:
Fig. 1 shows a half-longitudinal section of one example of a conventional gas turbine engine;
Figure 2 shows a schematic layout of a fuel system according to an example of the invention;
Figure 3 shows a schematic layout of a fuel system according to a further example of the invention; and,
Figure 4 shows an example of a system according to a further example of the invention on board an aircraft.

### DETAILED DESCRIPTION OF THE INVENTION

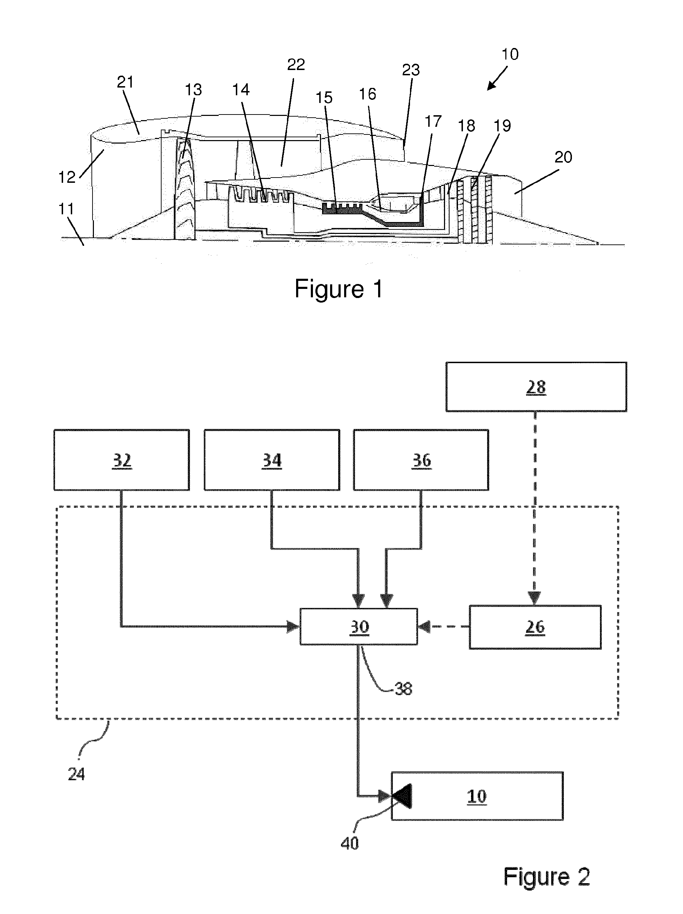

With reference to Figure 1, a ducted fan gas turbine engine generally indicated at 10 has a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and a core engine exhaust nozzle 20. A nacelle 21 generally surrounds the engine 10 and defines the intake 12, a bypass duct 22 and a bypass exhaust nozzle 23.

The gas turbine engine 10 works in a conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive, the high, intermediate and low-pressure turbines 17, 18, 19 before being exhausted through the nozzle 20 to provide additional propulsive thrust. The high, intermediate and low-pressure turbines 17, 18, 19 respectively drive the high and intermediate pressure compressors 15, 14 and the fan 13 by suitable interconnecting shafts.

Alternative gas turbine engine arrangements may comprise a two, as opposed to three, shaft arrangement and/or may provide for different bypass ratios. Other configurations known to the skilled person include open rotor designs, such as turboprop engines, or else turbojets, in which the bypass duct is removed such that all air flow passes through the core engine. It will be appreciated that an aircraft will typically comprise two or more gas turbine engines of the kind described herein, although the invention may equally apply to a single-engine aircraft.

It will be appreciated that the present invention may also be applied to fuel systems in which the one or more aircraft engine is not a gas turbine engine but instead is a reciprocating engine or piston engine. For any such, and other, examples of the invention fuels other than those described herein may be used, such as gasoline, diesel, bio-ethanol, biodiesel, or other conventional engine fuels.

It will further be appreciated that the invention may additionally or alternatively be applied to the supply of fuel for an aircraft's auxiliary power unit (APU) or other device requiring fuel for combustion.

Figure 2 shows a diagrammatic representation of a system 24 for controlled supply of fuel to one or more engine 10. In Figure 2, the arrows with solid lines indicate the fuel flow communication path, and the arrows with dashed lines indicate signal communication routes.

The fuel system 24 has a control unit 26 which is in signal communication with a wider aircraft or engine control system, generally indicated as 28. The wider control system may comprise a conventional propulsion control system for receiving a number of control inputs, including sensor readings and commands from the cockpit, such as thrust commands, e.g. amongst other control signals.

The control unit 26 is also in signal communication with a fuel composition regulator 30. The fuel composition regulator 30 is in fluid communication with a plurality of fuel sources 32, 34, 36, each containing a respective fuel composition. The source of the first fuel composition is a first tank 32 for storage of a first fuel composition, and the source of the second fuel composition is a second tank 34 for storage of a second fuel composition. In the example shown the source of a third fuel composition is a third tank 36 for storage of a third fuel composition, although, in general, it is envisaged that two or more fuel sources could be used and so the third source 36 may or may not be necessary. The tanks 32, 34, 36 are located on board the aircraft 10. The tanks 32, 34, 36 etc are fluidly isolated from one another. That is to say, the tanks are typically not in fluid communication with each other, and there is no flow of fluid between them that would allow mixing of different fuels. The term "fuel source" used herein is intended to mean an individual tank or a network of fluidly interconnected tanks, where each tank/network can be fluidly isolated from the other respective tanks/networks for the purpose of fuel storage.

The fuel regulator 30 comprises a plurality of inlets, typically at least one for each fuel source and an outlet 38 for passage of flow towards the engine(s) 10. The flow through each inlet into the regulator is controlled by control unit 26 by individual actuators so that flow from each fuel source 32, 34, 36 is independently regulated. A single regulator 30 which is in fluid communication with all of the fluid tanks may thus have selectively openable and/or closable valves to control fuel flow therethrough from each, or a combination, of the fuel sources.

In this example, it is envisaged to be the simplest implementation of the system to provide the entirety of the fuel required by the engine(s) 10 from a single fuel source 32, 34, 36 at any one time. Thus the regulator can selectively open one inlet at any instant in time, without requiring additional equipment to mix/blend fuels from multiple sources. The regulator may thus comprise a relatively simple manifold assembly. In alternative embodiments, the regulator may comprise a plurality of individual valves under the control of the control unit 26, each valve being associated with an individual fuel source, wherein the pipes from each fuel source may each meet at a simple pipe junction downstream of its respective valve for passage of fuel from any one fuel source to the engine.

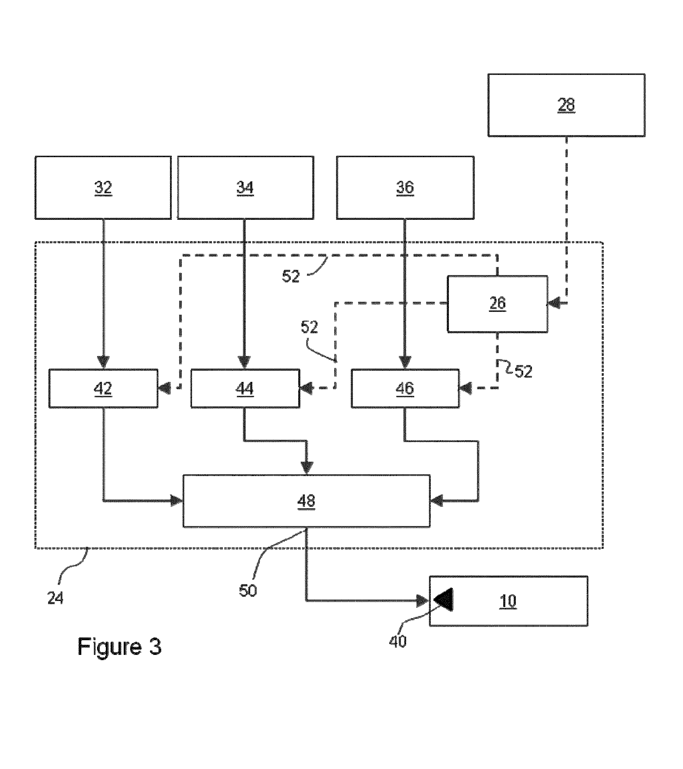

The outlet 38 or common fuel pipe delivers the resultant fuel composition to a fuel injection device 40 in the engine(s) 10. The fuel injection device 40 may be any type of fuel injector, for example a fuel nozzle, airspray injector, or plain orifice. The fuel injection device 40 may comprise one fuel injector, or a plurality of fuel injectors for any one or more engine. Although in Figure 2 and Figure 3 only one fuel injector 40 is shown, each engine 18 may be fitted with a number of fuel injectors 40, each in parallel fluid communication with the fuel regulator. Thus a common fuel injector arrangement may be provided which can accommodate the plurality of different fuels stored on the aircraft.

Turning now to Figure 3, an alternative configuration is shown in which like numerals are used to refer to like features. This example differs from that of Figure 2 in that an individual regulator 42, 44, 46 is provided for each fuel source 32, 34, 36. The fuel system 24 may further comprise a fluid blender 48 in fluid communication with the source 32 of the first fuel composition and the source 34 of the second fuel composition, etc via the regulators located in the flow path there-between. In this configuration, the blender 48 is configured to mix the different fuel composition provided to it via the regulators in order to produce a resultant fuel composition, which is delivered to the engine(s) 10. Either the regulators or the fluid blender 48 may be configured to control flow rate, such that the total flow rate of the resultant fuel composition exiting the blender 48 at outlet 50 is sufficient to satisfy the fuel demand of the engine(s) 10.

The number of fuel composition regulators may thus be dependent upon the number of fuel compositions with which the system is configured to operate. Whilst the arrangement of Figure 3 introduces further complexity over that of Figure 2, the onboard fuel blending equipment may be required in the event that fuel contained in one or more of the fuel sources cannot be used in isolation, for example due to an aromatic content of the fuel being outside of a permissible threshold, or else due to a requirement to control engine exhaust emissions.

As with Figure 2, it is envisaged that the most likely implementation will comprise only two different types of fuel and thus two engine fuel sources onboard the aircraft. The additional fuel source is shown purely to indicate how a system according to the invention can be scaled up to accommodate three or more fuel sources.

The wider control system 28 will dictate to the control unit 26 in use the thrust/throttle requirements of the aircraft. The control unit 26 controls the flow of fuel to the engines by control signals 52 to the regulator(s) in order to meet the total instantaneous fuel demand. Individual and/or different control signals 52 may be provided to each regulator 42, 44, 46 by the control unit 26 according to the currently desired fuel composition to deliver to the engine. Typically the control unit controls a common concurrent fuel flow to each of the engines in parallel on board the aircraft.

In the default mode of operation, the control unit 26 in the configuration of Figure 2 will send a control signal to deliver fuel from only one fuel source at any one instance. In the configuration of Figure 3, the control unit 26 may operate as per the example of Figure 2 in the default mode or else may send a control signal 52 to deliver fuel from a plurality of fuel sources at any one time in a predetermined, fixed ratio in order to meet the total instantaneous fuel demand. It is to be noted that the arrangement of Figure 3 may provide a fuel blending capability that is used in other, non-default modes of operation in which a variable, or optimal, fuel blend may be required according to sensed conditions.

Below is provided a description of the method of control of the delivery of the different fuel to the engine(s) in accordance with examples of the invention. The invention resides in a general sense in the coordination of two or more fuels which are fairly similar in characteristics (e.g. because biofuels are deliberately produced to be as far as possible direct substitutes for kerosene), such that, rather than following a conventional approach of using them in parallel (i.e. mixing them in a variable or uniform manner), keeping them separate and burning them in series. Thus, when burning the fuels in series, a choice can be made as to which fuel type or fuel blend to burn first, i.e. as a default priority, such that the 'heavier fuel' (having more weight/mass per unit of energy) is generally consumed earlier (or as early as possible) for each flight.

It may therefore be considered to be an aspect of the invention that the available fuels on board an aircraft are burned as a default setting in series in an order according to the gravimetric energy density, also known as the specific energy, of each fuel. In this context, it is important to note that the gravimetric energy density concerns the energy available in the fuel per unit mass/weight. This is a different consideration to the volumetric energy density. The volumetric energy density is an important practical consideration as to how much fuel can be accommodated in the available volume on board the aircraft but is not the primary consideration in determining which fuel to burn first under the present invention. Volumetric energy density may or may not offer a secondary, optional consideration in the decision making process of the present invention.

The invention may be applicable to any fuels offering a direct replacement for a conventional aviation fuel, such as kerosene, including gas-to-liquid fuels and biofuels including, but not limited to, BTL, HRJ, ATJ, SPK. The invention seeks to exploit the fact that such alternative fuels typically have a higher specific energy (measured in MJ/kg), thereby making them a 'lighter' alternative to conventional kerosene.

The invention is also contrary to conventional thinking in that limits are imposed on the aromatic content of aircraft engine fuel that can be used. The upper limit is currently set in regulations at 25%, whilst the lower limit is generally taken to be in the region of 8%. This suggests that certain fuel blends need to be achieved to always remain within those limits and that mixing of a biofuel, having lower than 8% aromatic content, with another fuel, such as kerosene, is necessary. However it has been determined that the lower limit exists to ensure ongoing health of certain engine components, such as seals and other components impacted by the fuel content. Therefore it has been proposed that the lower limit on aromatic content is not necessarily a hard limit and it may therefore feasible to reduce the instantaneous fuel aromatic content to less than 8% for a proportion of the flight provided that on average the aromatic content is 8% or more. This means it may be possible to burn a purer, 'lighter' biofuel in the latter stages of the flight and more kerosene earlier in the flight, rather than blending those fuels at every instance of biofuel use.

Whilst an optimal efficiency saving under the present invention would result in an entire fuel type/composition being consumed in advance of one or more further fuel type/compositions on board, the ability to achieve this maximal efficiency saving is confined by other practical considerations. For example, one or the other fuel may carry an additional requirement, in that it may be preferable to use one fuel instead of the other(s) under certain engine conditions. Thus it is proposed to maintain a volume of the fuel in reserve, such that it is not entirely consumed in the default, or 'normal', mode of engine operation. The reserve volume will typically be a relatively small percentage (e.g. less than 20%, 10% or 5%) of each fuel type initially loaded onto the aircraft. However the exact percentage of the reserve fuel required will depend on the possible scenarios in which it is determined that a single fuel can be used to achieve a desirable benefit and may therefore vary from the example percentages given above. In some examples, a certain volume of fuel may be required to be kept in reserve for one or more flight phase, such that, once a flight phase is complete, the reserve volume becomes available for use in the default operation mode.

Although not essential to the invention, the ability to blend different fuels on board may be needed for practical reasons. It is generally envisaged that suitable fuel compositions will be delivered to the aircraft by ground-based fuelling systems such that blending onboard of the distinct fuel compositions is not required. However, in the event that it is desirable to deliver via ground based systems at least one fuel composition that is not suitable for burning without blending with another fuel, then fuel blending equipment would be required on board. However such blending under the present invention would not constitute conventional blending in that the control unit under an example of the present invention would blend to achieve only one of two different final compositions in the default condition, namely one of a maximum possible specific energy fuel blend and a minimum possible specific energy fuel blend. Those two fuel blends would be implemented in series in the default condition in the manner described above. Also this process could be implemented for three or more available fuels, bearing in mind that each fuel may have a different requirement for the volume/percentage of that fuel to be kept in reserve for non 'normal' use.

Whilst the above description concerns primarily the supply of biofuels and kerosene, LNG (liquefied natural gas) currently offers vastly lower price per joule of energy relative to kerosene and may also offer a route to significantly reducing emissions of CO2, particulates and NOx. Unlike a biofuel or GTL, LNG is not a direct replacement for kerosene, and requires different storage infrastructure within the aircraft, and different fuel-delivery systems to introduce it to the engine. Although LNG's gravimetric energy density (i.e. its specific energy) is superior to that of kerosene, its volumetric energy density is not. The tanks for storage of LNG are heavy because they must be thermally insulated, so are not sized according to the aircraft's maximum range due to the excess weight and space penalty that would be incurred for a majority of aircraft use. As a result, when designing an LNG-fuelled plane, the LNG tanks are typically sized to correspond to an "average" mission length, and kerosene is used to extend the range towards the aircraft's design range when required.

Therefore, on a simple cost-based analysis, a gas turbine engine would be started using kerosene but switched to LNG as soon as possible thereafter in order to burn the most cost-effective fuel. In contrast, according to the present invention the default condition would control usage of all the available kerosene first, and switch to LNG once the allocated kerosene has been used up. A small volume of kerosene would be kept in reserve for any engine re-lights that may be required during the flight. Additional reserve kerosene may also be maintained for further non-normal, but possible scenarios, since it would be most cost-effective to maintain the more expensive of the two fuels for possible use rather than definite use.

In the context of the present invention, LNG is particularly advantageous since LNG has a higher specific energy than kerosene or conventional biofuels. Also, while biofuels may need to be blended with kerosene to comply with fuel specifications, LNG has no such requirement, and a suitable fuel composition can therefore comprise 100% LNG. Thus the efficiency savings in burning kerosene and LNG in a default order of priority according to the invention can be potentially larger than in a kerosene/biofuel scenario.

The above description considers the sequential use of kerosene with other fuels such as biofuel, GTL or LNG. However kerosene itself comprises many distinct fuel components including paraffins, iso-paraffins, cyclo-paraffins, and aromatics. The aromatic components within kerosene have a significantly lower specific energy than the paraffinic components. Therefore it is also possible to supply two or more distinct compositions of kerosene as two distinct fuel types. In the first fuel type, the aromatic content may be set to a maximum allowable value subject to prevailing fuel specifications. In the second fuel type the aromatic content is much lower. The relative volumes of the two kerosene varieties and their precise compositions may be such that, if they were they to be mixed in the right proportions, the result would be substantially the same as "normal" kerosene. According to the present invention, the fuel type with the higher aromatic content would be burned first, due to its lower specific energy, and the second fuel type would be burned afterwards. In this way, a slight but notable reduction in fuel-burn would be achievable.

In view of the above description, it will be appreciated that there are constraints on the specifications of the final fuel compositions delivered to the engine (i.e. the 'lighter' fuel and the 'heavier' fuel, or mixtures thereof) in order for the fuels to be burned. For instance the aromatic content of any fuel composition supplied to the engine would need to be no greater than the prevailing upper limit (currently 25%). Furthermore the minimum level of fuel aromatic content (currently 8%) that can be tolerated by an engine may be treated as an "average" requirement over a flight, or else as a strict threshold that must be met at every moment of the flight. Using these rules, a calculation of how best to divide/separate a conventional fuel supply into two or more different fuel compositions can be performed by an aircraft operator (i.e. an airline).

An initial fuel composition, to be burned first as a default condition, could be kerosene or a blend of kerosene with an alternative fuel described herein.

The invention therefore derives from the ability to 'separate' a conventional single fuel source into two or more discrete fuel sources for sequential use. The separation process may comprise a chemical or physical process which takes a single initial fuel composition and produces from it two distinct final fuel compositions which, if mixed, would produce a composition substantially identical to the initial fuel composition. Alternatively the separation process may involve a fuel supplier being able to supply a first quantity of a first fuel composition and a second quantity of a second fuel composition, where the two compositions, and also the ratio of their respective quantities supplied, is consistent with a fuel composition which would be supplied under a more conventional jet-fuel supply agreement. Thus as well as actively separating distinct fuel compositions, or creating distinct fuel compositions, the invention also encompasses simply keeping separate two compositions that may more conventionally be mixed before delivery to an aircraft.

The above description proposes maintaining distinct fuel compositions on board the aircraft. The distinct fuel sources, referred to herein, would typically comprise a number of fluidly interconnected tanks for one, or each, fuel composition. It is to be noted that it may be useful to allow selective communication of fuel between tanks of different fuel sources, for example to allow management of an aircraft's centre of gravity. This may be achieved by providing pipes between different fuel tanks and associated valves which can allow fuel to flow selectively between tanks without passing the regulator(s) 30 or 42, 44, 46 described above.

Thus in one embodiment of the invention, one or more fuel source may comprise an array of tanks, each containing the same initial fuel composition. The tank of one fuel source may be connected to a tank of an alternative fuel source for selective delivery of fuel therebetween. However it is envisaged that any one tank would be substantially emptied of its initial fuel composition and isolated from the remaining tanks in its respective tank array before permitting partial or complete filling with fuel from an alternative fuel source. This may allow greater flexibility in the management of the aircraft centre of gravity, whilst also maintaining the distinct nature of the fuels on board the aircraft in accordance with the invention. One or more pump may be provided to allow selective redistribution of fuel across available free tanks as required. In this manner the precise array of tanks in any one fuel source tank array could vary during the course of a flight as fuel is redistributed.

In view of the above description, it will be appreciated that the process by which fuel is delivered to aircraft may be updated to accommodate the present invention, or at least the relative quantities of fuel calculated in advance. The manner in which the available supplies of different fuels are divided amongst a number, e.g. a fleet, of aircraft under a common aircraft operator may form another aspect of the invention, which may be implemented in combination with the aspects of the invention described above.

The method of allocating different fuels to different aircraft involves consideration of the differences between the flights to be undertaken by the aircraft. The flight distance is a key consideration. However there are a number of other variables that could additionally be taken into consideration, such as time/distance taxiing, airport congestion and possible delays, etc. Furthermore, biofuels are in short supply, and their availability may be limited to/for certain airports. Accordingly, below is provided consideration of how best to distribute a limited quantity of higher-specific-energy fuel (such as biofuel) across a collection of flights departing from an airport, or across a fleet of aircraft travelling between multiple airports.

In general, the greater the proportion of total aircraft weight which is attributable to fuel, then the greater will be the benefit of replacing (some of) the fuel (e.g. kerosene) with an alternative (e.g. biofuel or GTL) which features less weight per unit energy.

The task of a fuel distribution controller is therefore to determine the most advantageous distribution of a fixed quantity of an alternative fuel (typically having a higher specific energy than kerosene) between flights within a collection of flights. If a quantity of alternative fuel is assigned to a flight, it is assumed to displace a quantity of kerosene from that flight that will be similar but not identical due to the different specific energies of the fuels.

The quantity of alternative fuel to be allocated will be influenced by the price and availability of the fuel-type (relative to that of kerosene) and by airline/airport policy concerning the use of such fuels.

The collection of flights, between which the fixed quantity of alternative fuel is to be distributed, could include for example flights of a particular airline(s) departing from a particular airport(s) within a specified time period (for example until the next delivery of alternative fuel).

Below is presented a variety of possible approaches to determining the "best" distribution of alternative fuel between flights.

In a first simplistic approach, fuel resources may be allocated using the following method:
- Start with the longest range flight within the plurality of flights being considered. Allocate to it as much alternative fuel as possible, subject to fuel-specification limits and any other hard constraints that may apply.
- Move to each next-longest-range flight in turn and repeat the allocation process until all the available alternative fuel is allocated.

It may be that the efficiency/fuel savings achieved by the above approach may diminish beyond a certain volume of alternative fuel for a given flight. Accordingly an upper limit for one or more fuel could be applied to each flight, e.g. such that the percentage of alternative fuel would stop being increased once the limit is reached for a particular flight, even though the fuel specifications might permit a greater proportion of alternative fuel. Thus the method would then move to fuel allocation for the next-longest flight in the collection. For example, the limit might be set at 50% or another suitable percentage, dependent on the relevant factors. In either of the above two approaches, if there are two or more flights with very similar or identical total fuel requirements, then the alternative fuel should be prioritised to whichever of the two flights has the greater airborne fuel-carrying requirement, e.g. the flight with the greater outbound taxi requirement would receive less alternative fuel.

A control routine for allocation of fuel on the ground is provided below as an example of the invention where the on-board control unit can operate as described herein:
- Identify the range Rₘₐₓ of the longest range flight within the collection of flights.
- Define a range-band whose upper bound Rᵤₚₚₑᵣ is equal to Rₘₐₓ, and whose lower bound R_{lower} is equal to Rᵤₚₚₑᵣ minus a pre-determined step-size S.
   ∘ BEGIN LOOP: For each flight within the collection whose range exceeds R_{lower}:
   ▪ identify the total quantity of fuel A required to perform that section of the flight lying within the range-band (taking account of the fuel that must be carried for later sections of the flight, should any such later sections exist)
   ▪ add to that flight's alternative fuel allocation the maximum permissible quantity of alternative fuel which can be used within the section of the flight lying within the range-band, taking account of 1) the quantity A calculated immediately above and 2) any limits on the proportion of alternative fuel within a fuel composition supplied to one or more engine
   ∘ IF there is not enough alternative fuel to fulfil requirements within the current range-band for all flights whose range exceeds R_{lower}, THEN
   ▪ repeatedly raise R_{lower} (without exceeding Rᵤₚₚₑᵣ) and retry the above, until the available alternative fuel is sufficient to satisfy the requirements within the smaller range band.
   ▪ Go to the FINAL STEP.
   ∘ ELSE assign to Rᵤₚₚₑᵣ the value currently held by R_{lower}. Then assign to R_{lower} the value currently held by R_{lower} minus the predetermined step-size S. Go to BEGIN-LOOP.
- FINAL STEP: A subset of the plurality of flights can now be defined, each of which has had some of its kerosene allocation replaced by an allocation of the alternative fuel. For each flight within this subset, review the total fuel loading requirement, since the specific energy of the alternative fuel is higher than that of the kerosene. Recalculate the total fuel requirement for each flight within the subset, taking account of the amount of alternative fuel allocated to that flight. Any surplus kerosene can then be eliminated from the kerosene allocation for that flight.

The above simplistic approaches have been described with reference to kerosene plus one alternative fuel-type. If there is more than one alternative fuel-type, then the above processes can be adapted slightly by taking the alternative fuel types in order, starting with the one with the greatest specific energy. So, for example one would allocate the available LNG first, followed by biofuel. Thus LNG would be allocated to the highest-range flight(s), while a biofuel (or a biofuel-rich blend) would be allocated to the highest-remaining-range flight(s).

A computer model, for example comprising one or more computational algorithm, lookup-table, database etc., may be developed using the above principles, which can calculate for a single flight the required amount of each fuel, taking account of the distance through which each kg of fuel must be carried whilst the aircraft is airborne, and/or the length of time that each kg of fuel must be carried. Factors influencing this calculation may include: the route-length and altitude profile, weather conditions (headwinds etc), taxiing distance at departure airport, expected delays or ground holding at departure airport, airborne holding at or near the arrival airport, taxiing distance at arrival airport, expected delays or ground holding at arrival airport.

In the context of the present invention, the model should also take account of the specific energy of the fuel used at each point of the flight, so as to model the impact of changes in the amount of alternative fuel allocated to the flight, as well as the impact of how it is used during the flight. In this way, the fuel allocation approach could take into account whether or not the control unit on board the aircraft will operate as described herein such that the benefits of the first aspect of the present invention can be accounted for, if required.

The use of an optimisation algorithm may evaluate a sequence of trial distributions, where a trial distribution represents a particular way of sharing the fixed quantity of alternative fuel across the collection of flights. The evaluation of a trial distribution will consist of calculating the total fuel-requirement for each flight within the collection, taking account of the alternative fuel allocation it receives under the trial distribution under evaluation, and summing them to produce a fuel-burn figure for the entire collection of flights. The optimisation algorithm will then try alternative distributions, eventually homing in on the distribution which minimises total fuel burn across the entire collection of flights, given a fixed quantity of alternative fuel. Thus an iterative process may be used to result in an optimal fuel distribution.

If more than one alternative fuel type is available, it would be possible to either:
- Incorporate more than one alternative fuel type into a single optimisation scheme, i.e. simultaneously determine the best distribution of all the alternative fuel types; OR
- Run a separate optimisation scheme for each of the alternative fuels, starting with the alternative fuel with the highest specific energy. Once the distribution of the n^{th} alternative fuel is decided, this is then "locked" and a separate optimisation run is performed for the (n+1)^{th} alternative fuel, which is allowed to displace only kerosene but not any previously-allocated alternative fuels.

Whilst the above description focuses on the primary, default fuel regime instructed by the fuel system control unit, there may be specific requirements for a quantity of one or more of the fuel compositions to be retained for occasional use later in the flight (such as for contrail mitigation). There may also be requirements for use of one or more of the fuel compositions to be avoided at certain points of the flight (such as in the landing and takeoff cycle). However, the usage of the heavier fuel would nonetheless be biased towards the earlier parts of the flight by way of the default fuel regime being instructed at all points of the flight in which there are no circumstances that require a bespoke non-default fuel supply.

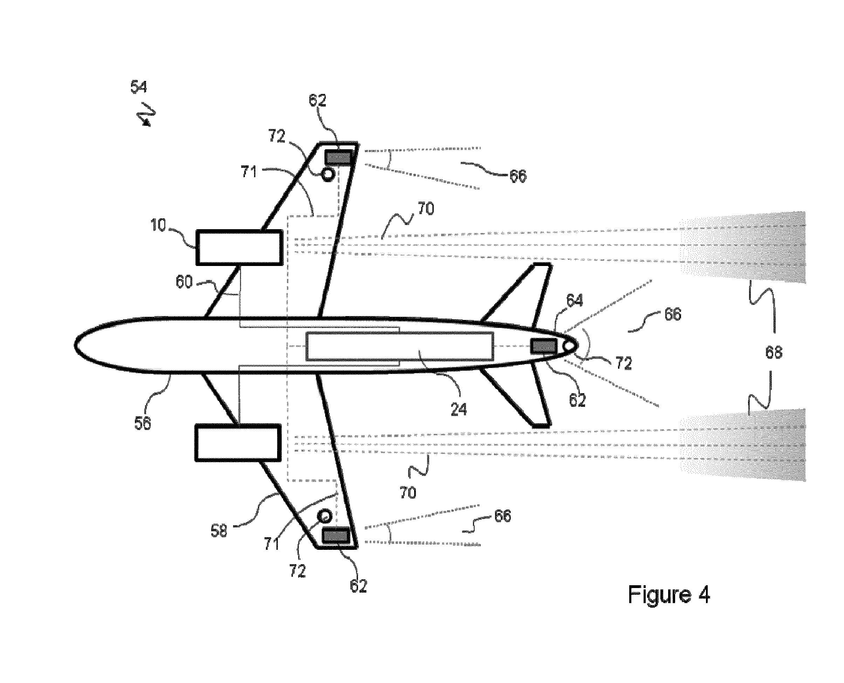

Figure 4 shows an aircraft 54, which comprises a fuel system 24 according to an example of the present disclosure. In the example shown the aircraft comprises a fuselage 56 and engines 10 mounted to wings 58. Other examples might involve alternative aircraft configurations, and different numbers of engines. The majority of the fuel system 24 is shown located in the fuselage 56. In alternative examples the fuel system 24 and/or associated fuel tanks may be located elsewhere in the airframe. Fuel pipes 60 fluidly connect the fuel system 24 and engines 10.

In this example, the fuel system 24 additionally comprises at least one vapour trail detection sensor 62. In the example shown in Figure 4, vapour trail detection sensors 62 are mounted towards the rear of the aircraft 54 facing aft. For example they are located at the tip of one or both wings 58 and/or at a trailing edge 64 of the fuselage. The, or each, vapour trail detection sensor 62 is mounted such that it has a field of view directed towards a vapour trail formation region. That is to say they are positioned such that they have a field of view 66 in a direction downstream of the aircraft during flight, which in operation will offer a view of vapour trails 68 formed within the exhaust plumes 70 downstream of the engines 10. Each of the vapour trail detection sensors 62 is configured to generate a signal 71 (shown as a dotted line) which indicates, for example, an optical depth (OD) of the young vapour trail 68. The signal 71 is fed to the control unit 26 within the fuel system of Figure 2 or 3.

Each vapour trail detection sensor 62 may be an optical device configured to deliver a signal indicative of the presence and/or properties of a vapour trail 68. A source of illumination 72 may also be provided on the aircraft and directed towards at least one region downstream of the engines 10 to illuminate at least part of the field of view 66 of the sensor 62. The sensor 62 is configured to detect electromagnetic radiation of at least one wavelength emitted and/or reflected by the vapour trail in response to energy emitted from the source of illumination 72. In other embodiments, instead of illumination, an emitter of sound (or ultrasonic) waves could be provided. The sensor would then be configured to detect the sound returned from the ice particles in the young contrail. It will be appreciated by the skilled person that other contrail or exhaust plume sensing means could be employed.

In an alternative embodiment, the function of the vapour trail detection sensor would be performed by equipment remote to the aircraft, and the resulting information transmitted to the aircraft. Such equipment might include for example sensors mounted on the ground, on airships or balloons, on other aircraft, and/or on earth-orbiting satellites. In such situations, the operation of the non-aircraft mounted vapour-trail detection sensors may optionally be enhanced by use of the aircraft-mounted source of illumination.

The arrangement of Figure 4 thus provides one example of a further use of the fuel system of the present example, i.e. for mitigating against the climate-warming impact of contrails. In response to contrail detection or other exhaust plume properties, the control unit may instigate switching of fuel sources delivered to the engine or mixing of two or more fuel sources to deliver a fuel composition to the engines 10 which has a favourable impact on contrail formation or properties, such as for example suppressing or modifying the formed contrail as desired. Such control schemes are the subject of EP 2685280 A2, amongst other patent applications in the name of the present applicant and the precise methods of control will not be repeated here for conciseness.

The control unit of the present invention may thus offer a further mode of operation, whereby upon sensing of any or any combination of atmospheric or engine operation parameters, the control unit may switch from a default mode of operation, in which fuel ordering is determined/implemented according to the specific energy of each fuel, to an alternative mode of operation, in which a fuel composition is delivered to the engine which is more suitable for a specific prevailing need. Contrail mitigation represents only one such alternative mode of operation and it is to be understood that there may be a plurality of alternative modes of operation that may require a specific fuel composition to be available, rather than the current default fuel. Other alternative modes may include, but are not limited to, engine relight and local air quality prioritisation.

Other alternative modes may include preparation of the engine for a period of non-operation e.g. between flights, overnight or for longer periods. In such circumstances it may be desirable to use a high, or sole, concentration of kerosene so that all the seals of the system, which may be formed of an eastomeric material, are in contact with a fuel having a sufficient aromatic content. The aromatic content helps to ensure a seal-swell that enables adequate sealing when the engine is inoperative. The alternative mode may be initiated on approach of the aircraft to land, on taxi or on idle once the aircraft is stationary. The alternative mode may be initiated at different times for different engines.

Conventional engine, aircraft and/or ambient sensors, other than those described above, may be used to determine when such an alternative mode of operation should be implemented in preference to the default mode of fuel supply described herein.

## Claims

1. A fuel delivery system for an aircraft engine (10), the system comprising:
a plurality of fuel sources (32, 34, 36) onboard an aircraft (54), each fuel source having a different fuel therein;
at least one fuel delivery regulator (30; 42; 44; 46) arranged to receive fuel from the plurality of fuel sources onboard the aircraft for supply to at least one aircraft engine, and
a control unit arranged to control operation of the regulator, wherein the control unit actuates the regulator so as to vary the flow of fuels from the plurality of fuel sources to the engine in an order of priority according to the specific energy of the different fuels in the plurality of fuel sources.

2. The fuel delivery system of claim 1, wherein the control unit controls the regulator so as to prioritise delivery of a first fuel having a lowest energy density per unit mass above the one or more other fuel on board the aircraft.

3. The fuel delivery system of claim 1 or 2, wherein the control unit controls sequential delivery of the different fuels in series order, wherein all of the available volume of each fuel is delivered to the engine in the priority order before instructing a change to the next fuel in the priority order.

4. The fuel delivery system of any preceding claim, wherein the system comprises a fuel blender (48).

5. The fuel delivery system of claim 4, wherein the control unit controls mixing of the fuels to achieve a first fuel blend with a minimal useable specific energy from the available fuels and controls delivery of the first fuel blend to the engine in advance of one or more individual fuel or further blend of the available fuels.

6. The fuel delivery system of any one of claims 1 to 4, wherein the control unit actuates the regulator to switch between the different available fuel sources without any substantial mixing of the different fuels.

7. The fuel delivery system of any preceding claim, wherein the priority order of delivery according to the specific energy of the different fuels comprises a default fuel delivery setting.

8. The fuel delivery system of claim 7, wherein the control unit alters the fuel delivered to the engine away from the priority order in response to any or any combination of a particular flight phase, a sensed engine condition, a sensed aircraft condition, and/or a sensed environmental or altitude condition.

9. The fuel delivery system of claim 7 or 8, wherein the control unit is arranged to determine a fuel composition best suited to contrail mitigation and alters the fuel delivered to the engine away from the default condition if the contrail mitigation fuel composition differs from the fuel currently being supplied to the engine in response to sensing of a contrail forming condition by the engine.

10. The fuel delivery system of any one of claims 7-9 wherein the control unit controls delivery of the entirety of an available volume of one fuel in priority before one or more further fuel or fuel type aboard the aircraft, and wherein the available volume of any one or more fuel is less than the total volume of said one or more fuel onboard the aircraft.

11. The fuel delivery system of claim 10, wherein the control unit determines a portion of the total volume of one or more different fuel to be retained in reserve such that it is not accessible in the default condition for at least one or more phase of a flight.

12. The fuel delivery system of claim 11, wherein the reserve fuel is maintained for one or more possible engine condition that is not schedulable in advance, such as an emergency or abnormal engine condition.

13. A fuel system control unit for an aircraft, the control unit comprising machine readable instructions for actuation of one or more fuel regulator so as to control delivery of a plurality of different fuels stored in respective fuel sources on the aircraft to one or more aircraft engine, wherein the control unit actuates the regulator in use so as to vary the flow of fuels from the plurality of fuel sources to the engine in an order of priority according to the specific energy of the different fuels in the plurality of fuel sources.

14. A data carrier comprising machine readable instructions for operation of a control unit to actuate of one or more fuel regulator during operation of one or more aircraft engine so as to control delivery of a plurality of different fuels stored in respective fuel sources on the aircraft to the one or more aircraft engine, wherein the control unit actuates the regulator in use so as to vary the flow of fuels from the plurality of fuel sources to the engine in an order of priority according to the specific energy of the different fuels in the plurality of fuel sources.
